# EUROPEAN PATENT APPLICATION

(11) **EP 2 314 155 A1**
(43) Date of publication of application: **27.04.2011**
(21) Application number: 09398013.4
(22) Date of filing: 23.10.2009
(51) Int. Cl.: A01K 39/014, A01K 39/012

(54) **Bird feeder**

(71) Applicant: Saraiva, Angelino Augusto, 2900-205 Setúbal (PT)
(72) Inventor: Saraiva, Angelino Augusto, 2900-205 Setúbal (PT)
(74) Representative: Pereira da Cruz, Joao

(57) **Abstract**

The present invention relates to a hopper-type receptacle for storing and dispensing feed for birds. The double feeding channel (3) is supplied by gravity depending on the rate of consumption, thus reducing waste. The geometric shape of the feeder (1) makes it possible to place various feeders in a line, forming corridors and allowing the birds to be separated by size or species. The large storage capacity with no feed wasted to the outside of the feeder increases local hygiene and reduces the periodicity with which the feeder needs to be filled. These feeders will be manufactured in plastic. There is also the possibility of placing a lid on the top part, thus allowing the feeder to be used outside.

## Description

### Scope of the invention

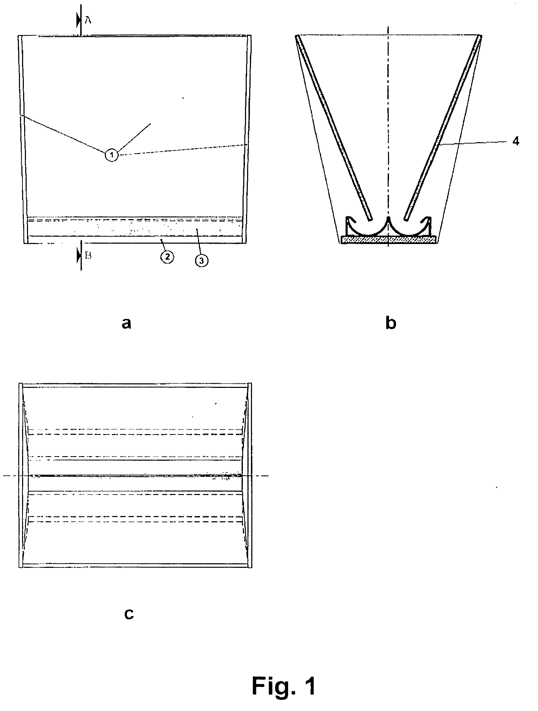

The present utility model relates to a hopper-type apparatus capable of storing and dispensing feed (Fig. 1) for birds of various species and sizes, not using for the feed dispensing function any type of power.

The applicant is not aware of the existence on the market of this type of bird feeder. In fact, the existing bird feeders do not comprise the features that are intended to be protected herein. Specifically, they do not prevent the birds, due to their constant "scratching", from wasting a large amount of the feed that is placed in the feeder. They likewise do not prevent the waste caused by contamination with faeces and/or other animal detritus.

### Brief description of the drawings

The description that follows is based on the drawings attached hereto, which represent:
- In figure 1a, a main elevation of the feeder of the invention;
- In figure 1b, a cross-section along the line AB of figure 1a;
- In figure 1c, a plan view of the feeder;
- In figure 2, a cross-section view of the feeder;
   and
- In figure 3, a possible assembly of the feeder.

### Detailed description of the invention

As may be observed, the feeder is constituted by a main body (1) placed on a support base (2), which also supports a double feeding channel (3). The body (1) is provided with sloping walls (4), which create a uniform outflow supplied by gravity depending on the rate of consumption by the birds.

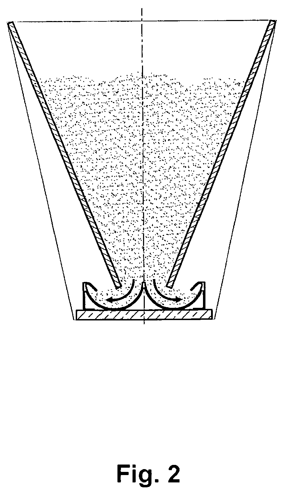

In other words, the outflow profile of the feeder is supplied by gravity depending on the rate of consumption by the birds according to the principle exemplified - cross-section (Fig. 2).

Various real-life tests were carried out over a certain period of time in order to observe the behaviour of the birds in the presence of the feeder. This made it possible to reconfigure the double feeding channel (3), thus reducing waste to the outside of the feeder by almost 100%. The said double channel (3) is configured such as to prevent the birds, however small they may be, from placing their feet in direct contact with the feed. Therefore, the waste caused by the birds "scratching" among the feed is prevented.

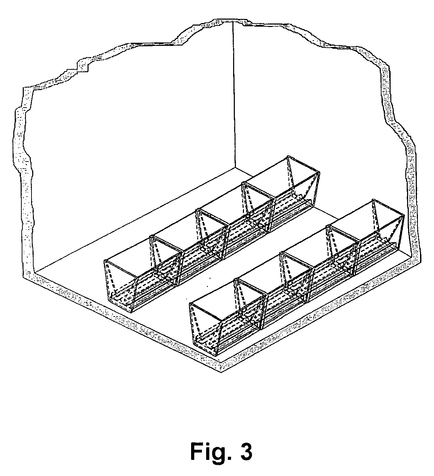

The geometric shape of the apparatus makes it possible to place various feeders in a line (in a lateral direction) forming corridors, thus allowing the birds to be separated by size or species (Fig. 3).

The feeders can have the following storage capacities: 10, 20, 30, 40, 50 Kg.

These bird feeders have a great volumetric capacity with no feed wasted to the outside, thus increasing local hygiene and reducing the periodicity with which the feeder needs to be filled, this being an advantage for bird breeders.

The feeders can be manufactured in plastic for the side and front body (1), with the support base (2) and the double feeding channel in PVC, or the whole apparatus can be made of plastic.

There is also the possibility of placing a lid on the top part, thus allowing the feeder to be used outside.

## Claims

1. A hopper-type bird feeder constituted by a main body (1) in conjunction with a double feeding channel (3), **characterised in that** the main body is provided with sloping walls (4), which create a uniform outflow supplied by gravity depending on the rate of consumption by the birds.

2. A feeder according to claim 1, **characterised in that** it has storage capacities of 10 to 50 Kg, with no feed wasted to the outside, thus increasing local hygiene and reducing the periodicity with which the feeder needs to be filled.

3. A feeder according to claims 1 and 2, **characterised in that** its geometric shape makes it possible to place various feeders in a line forming corridors, thus allowing the birds to be separated by size or species.
